(19) Europäisches Patentamt / European Patent Office / Office européen des brevets

(11) **EP 4 663 710 A1**

(12) **EUROPEAN PATENT APPLICATION**

(43) Date of publication:
**17.12.2025   Bulletin 2025/51**

(21) Application number: **24182414.3**

(22) Date of filing: **14.06.2024**

(51) International Patent Classification (IPC):
***C09D 151/00*** (2006.01)

(52) Cooperative Patent Classification (CPC):
(C-Sets available)
**C09D 151/003;** C08L 2207/20; C08L 2207/53
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Organik Kimya Sanayi Ve Tic. A.S.**
  **34075 Eyüp - Istanbul (TR)**
• **Organik Kimya Netherlands BV**
  **3197 KC Botlek Rotterdam (NL)**

(72) Inventors:
• **ALTINOK, Sibel**
  **34075 KEMERBURGAZ (TR)**
• **ERGUN ERSEN, Nur Basak**
  **34075 KEMERBURGAZ (TR)**
• **KARAGÖZ, Sevki**
  **34075 KEMERBURGAZ (TR)**

(74) Representative: **Plasseraud IP**
**104 Rue de Richelieu**
**CS92104**
**75080 Paris Cedex 02 (FR)**

(54) **CORE-SHEATH-SHELL POLYMER PARTICLES, PREPARATION AND USE THEREOF**

(57)    The present invention relates to core-sheath-shell polymer particles containing voids, said polymer particles being obtained from at least one recycled monomer. The present invention also relates to a process for preparing said particles. The use of said particles as binding or opacifying agents in paints, coating, impregnating, and molding compositions primarily, also extended to paper coatings and to some extent in leather, textiles and water-based construction materials, is also part of the present invention.

(52)  Cooperative Patent Classification (CPC): (Cont.)

C-Sets
**C08F 285/00, C08F 212/08**

## Description

### Technical domain of the invention

The present invention relates to core-sheath-shell polymer particles containing voids, said polymer particles being obtained from at least one recycled monomer. The present invention also relates to a process for preparing said particles. The use of said particles as binding or opacifying agents in paints, coating, impregnating, and molding compositions primarily, also extended to paper coatings and to some extent in leather, textiles and water-based construction materials, is also part of the present invention.

### Background of the invention

In the 21st century, one of the most critical challenges revolves around reducing the waste generated by human activities. Plastic and polymer production has surged exponentially since the 1950s, outpacing the growth of any other material. While polymers can indeed be recycled, only a fraction of plastic and polymer waste undergoes effective recycling. This discrepancy poses a significant hurdle in a pursuit of sustainability.

Recycling processes often yield recycled monomers with a significant issue: a high level of impurities. These impurities tend to exceed those found in their corresponding virgin monomer. Consequently, when these recycled monomers are used to create new polymers, their technical performance suffers. The more pronounced the impurity levels, the greater the degradation in the resulting polymer's properties. The reason lies in the detrimental impact of impurities on monomer polymerization.

To overcome this problem, polymer recycling procedures incorporate a crucial purification step. This step aims to prevent contamination of recycled monomers by impurities and minimize their presence. Various purification techniques have been developed to achieve this goal. However, it's essential to recognize that purification introduces additional complexity, cost, and energy consumption into the recycling process.

Thus, as more sustainable practices are sought, novel solutions must be found. One promising way involves improving the depolymerization process. By enhancing depolymerization, recycled monomers can be produced with purity levels equivalent to those of virgin monomers.

Despite these efforts, the specter of high impurity levels remains a persistent obstacle to fully realizing the potential of recycled monomers. In a quest for sustainable materials, addressing this issue is crucial to maximizing the technical performance of recycled polymers. Indeed, it is expected that the polymerization of recycled monomers comprising a high level of impurities, for example because not purified, would lead to polymers with degraded properties.

However, against all expectations and against the knowledge of a person skilled in the art, the Applicant has discovered that it was possible to use recycled monomers, containing a substantial amount of impurities, to obtain polymers having substantially the same performances and properties compare to polymers obtained with virgin monomers.

It is therefore an object of the present invention to provide a process of preparing core-sheath-shell opacifying polymeric particles having at least the same or comparable performances like those particles disclosed in the EP 2511312 B1 patent, in particular similar opacity values, in which those particles are obtained from at least one recycled monomer.

### Summary of the invention

The present invention relates to core-sheath-shell polymer particles containing voids, said polymer particles being obtained from at least one recycled monomer. The present invention also relates to a process for preparing said particles. The use of said particles as binding or opacifying agents in paints, coating, impregnating, and molding compositions primarily, also extended to paper coatings and to some extent in leather, textiles and water-based construction materials, is also part of the present invention.

### Detailed description of the invention

A first object of the invention is core-sheath-shell polymer particles containing voids, said polymer particles being obtained from at least one recycled monomer.

The polymer particles of the present invention are multi-stage polymer particles. The stages of the multi-stage polymer particles of the present invention include core stage polymer (A), sheath stage polymer (B), and shell stage polymer (C). The core, sheath and shell may themselves be comprised of more than one stage.

When the particles are in the form of an aqueous emulsion, the swollen core-sheath-shell polymer particles contain voids which are filled with liquid water. On drying, the voids become filled with air, thus giving the particles their opacifying properties.

The general term "recycled monomer" as used herein and throughout the specification is intended to refer to a recovered monomer from recycling process, generally after the recycling process of a polymer. A recycling process is to be understood as a process that transforms a polymer comprising a monomer into said monomers, for example by thermal cracking or pyrolysis.

The core of the multi-stage polymers of the present invention are emulsion polymers comprising, as polymerized units, from 5 to 100 percent by weight, based on the weight of the core, of at least one hydrophilic monoethylenically unsaturated monomer containing acid functionality, and from 0 to 95 percent by weight, based on the weight of the core stage polymer, of at least one nonionic monoethylenically unsaturated monomer.

According to a particular embodiment, in the core of the core-sheath-shell polymer, the hydrophilic monoethylenically unsaturated monomer and/or the nonionic monoethylenically unsaturated monomer is/are a recycled monomer.

Cores containing at least five percent by weight, based on the total weight of the core polymer, of at least one hydrophilic monoethylenically unsaturated monomer containing acid functionality will generally result in a suitable degree of swelling. Preferably, the core comprises, as polymerized units, hydrophilic monoethylenically unsaturated monomer containing acid functionality at a level of from 5 to 100, more preferably, from 20 to 60, and most preferably, from 30 to 50 percent by weight based on the total weight of the core. The hydrophilic core polymer may be made in a single stage or step of the sequential polymerization or may be made by a plurality of steps in sequence.

Suitable hydrophilic monoethylenically unsaturated monomers containing acid-functionality useful for making the core polymer include monoethylenically unsaturated monomers containing at least one carboxylic acid group including acrylic acid, methacrylic acid, acryloxypropionic acid, (meth)acryloxypropionic acid, itaconic acid, aconitic acid, maleic acid or anhydride, fumaric acid, crotonic acid, monomethyl maleate, monomethyl fumarate, monomethyl itaconate and the like. Acrylic acid and methacrylic acid are preferred.

Suitable nonionic monoethylenically unsaturated monomers for making the hydrophilic core polymer include styrene, $\alpha$-methyl styrene, p-methyl styrene, t-butyl styrene, vinyltoluene, ethylene, vinyl acetate, vinyl chloride, vinylidene chloride, (meth)acrylonitrile, (meth)acrylamide, (C1-C20) alkyl or (C3-C20) alkenyl esters of (meth)acrylic acid, such as methyl (meth)acrylate, ethyl (meth)acrylate, butyl (meth)acrylate, 2-ethylhexyl (meth)acrylate, hydroxyethyl(meth)acrylate, hydroxypropyl(meth)acrylate, benzyl (meth)acrylate, lauryl (meth)acrylate, oleyl (meth)acrylate, palmityl (meth)acrylate, stearyl (meth)acrylate and the like.

In a preferred embodiment of the invention, the core (A) is polymerized from a core monomer system comprising 30-40 % by weight (meth)acrylic acid and 60-70 % by weight methyl (meth)acrylate.

The core, whether obtained by a single stage process or a process involving several stages, has an average particle size of from 50 nm to 300 nm, preferably from 100 nm to 250 nm, diameter in unswollen condition. If the core is obtained from a seed polymer, the seed polymer preferably has an average particle size of from 30 nm to 100 nm.

The average particle size of samples is measured via Dynamic Light Scattering technique. In particular, a Zetasizer Pro instrument can be used.

In particular, the following protocol can be used to measure said average particle size. Samples are diluted with 10 mM NaCl solution at room temperature. NaCl solution is used to stabilize the charge density around the particle. Then sample is transferred to the cuvette and placed into the device. The measurement is repeated 3 times and the average is taken. The results are interpreted in terms of 'volume ordered by area' displaying a volume-based particle size distribution.The multi-stage polymer particles of the present invention contain an intermediate stage, i.e. a sheath polymeric layer (B). The sheath polymeric layer (B) partially or fully encapsulates the core (A) and itself is partially or fully encapsulated by the shell (C). The sheath polymeric layer (B) is prepared by conducting an emulsion polymerization in the presence of the core.

The hydrophilic monoethylenically unsaturated monomers containing acid functionality and the nonionic monoethylenically unsaturated monomers useful for making the core are also useful for making the sheath polymeric layer.

According to a particular embodiment, in the sheath of the core-sheath-shell polymer, the hydrophilic monoethylenically unsaturated monomer and/or the nonionic monoethylenically unsaturated monomer is/are a recycled monomer.

Preferably, the sheath polymeric layer is polymerized from a sheath monomer system (E1) comprising at least 20 % by weight, more preferably at least 40 % by weight, of styrene, at least 20 % by weight, more preferably at least 40 % by weight, of methyl (meth)acrylate, and 1% to 20 % by weight of (meth)acrylic acid.

The shell (C) of the multi-staged polymer of this invention is the product of emulsion polymerizing a shell monomer system (E2) comprising, as polymerized units, from 1 to 10 percent by weight, of hydrophilic monoethylenically unsaturated monomer containing acid functionality, and from 90 to 99 percent by weight, of at least one nonionic monoethylenically unsaturated monomer, each based on the total weight of the polymeric shell.

The nonionic monoethylenically unsaturated monomers suitable for the core are also suitable for the shell. According to a particular embodiment, styrene is preferred.

The shell also contains, as polymerized units, from 1 to 10, preferably from 1 to 5, percent by weight based on the weight of the shell, of one or more monoethylenically unsaturated monomers containing acid-functionality including acrylic acid, methacrylic acid, acryloxypropionic acid, (meth)acryloxypropionic acid, itaconic acid, aconitic acid, maleic acid, maleic anhydride, fumaric acid, crotonic acid, monomethyl maleate, monomethyl fumarate, monomethyl itaconate and the like. Acrylic acid and methacrylic acid are preferred.

The shell may also optionally contain less than 20 percent by weight, preferably from 0.1 to 3 percent by weight, based on the total weight of the shell, of polyethylenically unsaturated monomer like alkylene glycol diacrylates and dimethacrylates, such as for example, ethylene glycol diacrylate, ethylene glycol dimethacrylate, 1,3-butylene glycol diacrylate, 1,4-butylene glycol diacrylate propylene glycol diacrylate and triethylene glycol dimethylacrylate; 1,3-glycerol dimethacrylate; 1,1,1-trimethylol propane dimethacrylate; 1,1,1-trimethylol ethane diacrylate; pentaerythritol trimethacrylate; 1,2,6-hexane triacrylate; sorbitol pentamethacrylate; methylene bis-acrylamide, methylene bis-methacrylamide, divinyl benzene, vinyl methacrylate, vinyl crotonate, vinyl acrylate, vinyl acetylene, trivinyl benzene, triallyl cyanurate, divinyl acetylene, divinyl ethane, divinyl sulfide, divinyl ether, divinyl sulfone, diallyl cyanamide, ethylene glycol divinyl ether, diallyl phthalate, divinyl dimethyl silane, glycerol trivinyl ether, divinyl adipate; dicyclopentenyl (meth)acrylates; dicyclopentenyloxy (meth)acrylates; unsaturated esters of glycol monodicyclopentenyl ethers; allyl esters of $\alpha,\beta$-unsaturated mono- and dicarboxylic acids having terminal ethylenic unsaturation including allyl methacrylate, allyl acrylate, diallyl maleate, diallyl fumarate, diallyl itaconate and the like.

According to a particular embodiment, in the shell of the core-sheath-shell polymer, the hydrophilic monoethylenically unsaturated monomer and/or the nonionic monoethylenically unsaturated monomer and/or monoethylenically unsaturated monomers containing acid-functionality and/or polyethylenically unsaturated monomer is/are a recycled monomer.

In a preferred embodiment of the present invention, the shell monomer system (E2) comprises, as polymerized units, from 1 to 10 percent by weight, of (meth)acrylic acid, and from 90 to 99 percent by weight, of styrene.

The core-sheath-shell polymer particles usually have an average particle size of from 250 nm to 1000 nm, diameter in unswollen condition. When intended for use as opacifying agent for paints, an average particle size of from 300 nm to 450 nm is preferable.

In a particular embodiment, the core of the Core-sheath-shell polymer *particles* is obtained from at least one recycled monomer, and/or the sheath of the Core-sheath-shell polymer *particles* is obtained from at least one recycled monomer, and/or the shell of the Core-sheath-shell polymer *particles* is obtained from at least one recycled monomer.

In a preferred embodiment, the core and the sheath of the Core-sheath-shell polymer *particles* are obtained from at least one recycled monomer. In a preferred embodiment, the core and the shell of the Core-sheath-shell polymer *particles* are obtained from at least one recycled monomer. In a preferred embodiment, the sheath and the shell of the Core-sheath-shell polymer *particles* are obtained from at least one recycled monomer. In a preferred embodiment, the core, the sheath and the shell of the Core-sheath-shell polymer *particles* are obtained from at least one recycled monomer.

In a particular embodiment, the at least one recycled monomer is selected from recycled methyl methacrylate, and recycled styrene, or its dimer, or its trimer.

In the present invention, the at least one recycled monomer comprises specific impurities present in a specific amount.

The determination of the amount of impurities in the recycled monomers is made by gas chromatography analysis. A non-limiting example of gas chromatography device that can be used for this purpose is Agilent 7890B with headspace Agilent 7697A and mass detector Agilent 5977B. The skilled person of the art knows how to determine the amount of an impurity in a sample with known gas chromatography method.

According to a particular embodiment, the at least one recycled monomer is recycled methyl methacrylate which can be obtained via chemical recycling of poly(methyl methacrylate) (PMMA). Contrary to many polymers, quantitative depolymerization of pure PMMA to the initial monomer is likely to occur.

Thermal cracking or pyrolysis process including the degradation of the polymeric material by heating under inert atmosphere is employed in chemical recycling of PMMA. Thermal decomposition of PMMA to MMA takes place at temperatures above ceiling temperature where the rate of propagation is equal to the rate of depropagation. During depolymerization, the chain backbone of the macromolecule is split by free radical mechanism. Initial molecular weight and pyrolysis temperature influence on thermal depolymerization mechanism of PMMA. While end-chain scission is favored in the temperature range of 330 to 400 °C, random chain scission and initiation are favored at temperatures above 400 °C.

The recycled methyl methacrylate monomer which can be used in the invention can comprise from 200 ppm to 30.000 ppm by weight of methyl isobutyrate, preferably from 300 ppm to 25.000ppm, more preferably from 400 ppm to 20.000 ppm, even more preferably from 500 ppm to 20.000 ppm, even more preferably from 800 ppm to 15.000 ppm, even more preferably from 1.000 ppm to 10.000 ppm, even more preferably from 1.200 ppm to 9.000 ppm, even more preferably from 1.400 ppm to 8.000 ppm, even more preferably from 1.600 ppm to 7.000 ppm, even more preferably from 1.800 ppm to 5.000 ppm, even more preferably from 2.000 ppm to 4.000 ppm.

The recycled methyl methacrylate monomer which can be used in the invention can comprise from 1 ppm to 15.000 ppm by weight of comprises methylacrylate, preferably from 10 ppm to 14.000 ppm, more preferably from 100 ppm to 13.000 ppm, even more preferably from 200 ppm to 12.000 ppm, even more preferably from 500 ppm to 11.000 ppm, even more preferably from 1.000 ppm to 10.000 ppm.

The recycled methyl methacrylate monomer which can be used in the invention can comprise from 100 ppm to 10.000 ppm by weight of methyl propanoate, preferably from 200 ppm to 8.000 ppm, more preferably from 300 ppm to 7.000 ppm, even more preferably from 500 ppm to 6.000 ppm, even more preferably from 750 ppm to 5.500 ppm even more preferably from 1.000 ppm to 5.000 ppm, even more preferably from 1.500 ppm to 4.000 ppm, even more preferably from 1.800 ppm to 3.500 ppm, even more preferably from 2.000 ppm to 3.000 ppm.

The recycled methyl methacrylate monomer which can be used in the invention can comprise from 1 ppm to 15.000 ppm by weight of ethylacrylate, preferably from 10 ppm to 10.000 ppm, more preferably from 100 ppm to 8.000 ppm, even more preferably from 200 ppm to 6.000 ppm, even more preferably from 500 ppm to 6.000 ppm, even more preferably from 1.000 ppm to 5.000 ppm.

The recycled methyl methacrylate monomer which can be used in the invention can comprise from 1 ppm to 15.000 ppm by weight of methyl pivalate, preferably from 10 ppm to 12.000 ppm, more preferably from 100 ppm to 10.000 ppm, even more preferably from 200 ppm to 8.000 ppm, even more preferably from 500 ppm to 7.000 ppm, even more preferably from 750 ppm to 6.500 ppm even more preferably from 1.000 ppm to 6.000 ppm, even more preferably from 1.500 ppm to 5.000 ppm, even more preferably from 2.000 ppm to 4.500 ppm, even more preferably from 2.200 ppm to 4.000 ppm, even more preferably from 2.500 ppm to 3.500 ppm.

The recycled methyl methacrylate monomer which can be used in the invention can comprise from 200 ppm to 30.000 ppm of methyl isobutyrate, and at least one compound, preferably at least two, more preferably at least three, selected from the list comprising methylacrylate, methyl propanoate, ethylacrylate and methyl pivalate, the amount of said compounds being selected from the respecify ranges described above.

The recycled methyl methacrylate monomer which can be used in the invention can comprise methyl isobutyrate, and at least one compound, preferably at least two selected from the list comprising methyl propanoate, and methyl pivalate, the amount of said compounds being selected from the respectively ranges described above.

The recycled methyl methacrylate monomer which can be used in the invention can comprise from 200 ppm to 30.000 ppm of methyl isobutyrate, and from 1 ppm to 15.000 ppm by weight of comprises methylacrylate, and/or from 100 ppm to 10.000 ppm by weight of methyl propanoate, and/or from 1 ppm to 15.000 ppm by weight of ethylacrylate, and/or from 1 ppm to 15.000 ppm by weight of methyl pivalate.

The recycled methyl methacrylate monomer which can be used in the invention can comprise from 200 ppm to 30.000 ppm of methyl isobutyrate, and from 100 ppm to 10.000 ppm by weight of methyl propanoate, and/or from 1 ppm to 15.000 ppm by weight of methyl pivalate. The above preferred ranges apply.

The recycled methyl methacrylate monomer which can be used in the invention can comprise from 200 ppm to 30.000 ppm of methyl isobutyrate, and from 1 ppm to 15.000 ppm by weight of comprises methylacrylate, and from 100 ppm to 10.000 ppm by weight of methyl propanoate, and from 1 ppm to 15.000 ppm by weight of ethyacrylate, and from 1 ppm to 15.000 ppm by weight of methyl pivalate.

The recycled monomers which can be used in the invention can further comprise methanol, methylacetate, and/or methylethylketone, and/or benzene, and/or toluene, and/or methylbutanoate, and/or dimethylhexadiene, and/or methyl 2-methylbutyrate, and/or 2-exyl 1-hexen, and/or n-propylcyclopentane. The amount of said compounds in the recycled methyl methacrylate is preferably comprised between 1 ppm and 4.000 ppm, more preferably between 5 ppm and 2.000 ppm, more preferably between 25 ppm and 1.000 ppm.

According to a particular embodiment, the at least one recycled monomer is recycled styrene, or its dimer, or its trimer, which can be obtained via chemical recycling of polystyrene (PS).

Thermal cracking or pyrolysis process including the degradation of the polymeric material by heating under inert atmosphere is employed in chemical recycling of PS. Thermal decomposition of PS to styrene takes place at temperatures above ceiling temperature where the rate of propagation is equal to the rate of depropagation.

The recycled styrene monomer, or its dimer, or its trimer, which can be used in the invention can comprise from 100 ppm to 25.000 ppm by weight of ethylbenzene, preferably from 150 ppm to 15.000 ppm, more preferably from 200 ppm to 10.000 ppm, even more preferably from 300 ppm to 8.000 ppm, even more preferably from 400 ppm to 5.000 ppm, even more preferably from 500 ppm to 3.000 ppm, even more preferably from 600 ppm to 2.000 ppm.

The recycled styrene monomer, or its dimer, or its trimer, which can be used in the invention can comprise from 150 ppm to 25.000 ppm by weight of cumene, preferably from 200 ppm to 15.000 ppm, more preferably from 300 ppm to 10.000 ppm, even more preferably from 400 ppm to 8.000 ppm, even more preferably from 500 ppm to 7.000 ppm, even more preferably from 600 ppm to 5.000 ppm, even more preferably from 700 ppm to 3.000 ppm, even more preferably from 800 ppm to 2.000 ppm.

The recycled styrene monomer, or its dimer, or its trimer, which can be used in the invention can comprise from 400 ppm to 15.000 ppm by weight of xylene, preferably from 500 ppm to 12.000 ppm, more preferably from 600 ppm to 10.000 ppm, even more preferably from 700 ppm to 8.000 ppm, even more preferably from 800 ppm to 6.000 ppm, even more preferably from 900 ppm to 5.000 ppm, even more preferably from 1000 ppm to 4.000 ppm, even more preferably from 1100 ppm to 3.500 ppm, even more preferably from 1200 ppm to 3.000 ppm, even more preferably from 1300 to 2.500 ppm, even more preferably from 1400 ppm to 2.000 ppm.

As a matter of clarification, in the present invention, the xylene comprises the ortho xylene, the meta xylene, and the para xylene.

The recycled styrene monomer, or its dimer, or its trimer, which can be used in the invention can comprise from 10 ppm to 3.000 ppm by weight of toluene, preferably from 20 ppm to 1.500 ppm, more preferably from 50 ppm to 1.000 ppm, even more preferably from 100 ppm to 800 ppm, even more preferably from 200 ppm to 600 ppm.

The recycled styrene monomer, or its dimer, or its trimer, which can be used in the invention can comprise from 10 ppm to 3.000 ppm by weight of benzene, preferably from 20 ppm to 1.500ppm, more preferably from 50 ppm to 1.000 ppm, even more preferably from 100 ppm to 800 ppm, even more preferably from 200 ppm to 600 ppm.

The recycled styrene monomer, or its dimer, or its trimer, which can be used in the invention can comprise from 1 ppm to 5.000 ppm by weight of 2,4,6-triphenyl-1-hexene, preferably from 5 ppm to 2.000 ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene monomer, or its dimer, or its trimer, which can be used in the invention can comprise from 1 ppm to 5.000 ppm by weight of 2,4-diphenyl-1-butene, preferably from 5 ppm to 2.000 ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene monomer, or its dimer, or its trimer, which can be used in the invention can comprise from 70 ppm to 5.000 ppm by weight of vinyl toluene, preferably from 90 ppm to 2.000 ppm, more preferably from 100 ppm to 1.000 ppm, even more preferably from 120 ppm to 800 ppm, even more preferably from 140 ppm to 600 ppm, even more preferably from 170 ppm to 500 ppm, even more preferably from 200 ppm to 400 ppm.

The recycled styrene monomer, or its dimer, or its trimer, which can be used in the invention can comprise from 1 ppm to 5.000 ppm by weight of 1,3-diphenylpropane, preferably from 5 ppm to 2.000 ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene monomer, or its dimer, or its trimer, which can be used in the invention can comprise from 200 ppm to 25.000 ppm by weight of alpha-methyl styrene, preferably from 300 ppm to 15.000 ppm, more preferably from 500 ppm to 10.000 ppm, even more preferably from 1000 ppm to 8.000 ppm, even more preferably from 1200 ppm to 5.000 ppm, even more preferably from 1400 ppm to 3.000 ppm, even more preferably from 1500 ppm to 2.000 ppm.

The recycled styrene monomer, or its dimer, or its trimer, which can be used in the invention can comprise 100 ppm to 25.000 ppm by weight of ethylbenzene, and at least one compound, preferably at least two, more preferably at least three, more preferably at least four, more preferably at least five, even more preferably at least six, even more preferably at least seven, even more preferably at least height compounds selected from the list comprising cumene, xylene (ortho, meta, para), toluene, benzene, 2,4,6-triphenyl-1-hexene, 2,4-diphenyl-1-butene, vinyl toluene, 1,3-diphenylpropane, alpha-methyl styrene, the amount of said compounds being selected from the respecify ranges described above.

The recycled styrene monomer, or its dimer, or its trimer, which can be used in the invention can comprise 100 ppm to 25.000 ppm by weight of ethylbenzene, and from 150 ppm to 25.000 ppm by weight of cumene, from 400 ppm to 15.000 ppm by weight of xylene (ortho, meta, para), from 10 to 3.000 ppm by weight of toluene, from 10 ppm to 3.000 ppm by weight of benzene, from 1 ppm to 5.000 ppm by weight of 2,4,6-triphenyl-1-hexene, from 1 ppm to 5.000 ppm by weight of 2,4-diphenyl-1-butene, from 70 ppm to 5.000 ppm by weight of vinyl toluene, from 1 ppm to 5.000 ppm by weight of 1,3-diphenylpropane, and from 200 ppm to 25.000 ppm by weight of alpha-methyl styrene.

The recycled monomer is obtained by a recycling process, generally after the recycling process of a polymer. In the present invention, the at least one recycled monomer is preferably obtained by a recycling process that does not comprise a purification step. In the present invention, the term "purification step" means an additional process step in which the amount of impurities present in the recycled monomer is decreased compare to the amount of impurities present in the recycled monomer directly obtained from the recycling process, for example the depolymerization of polymers.

In other terms the recycled monomer used in the present invention is preferably not purified in a purification step. The recycled monomer used in the invention preferably comprises the impurities present at the end of the recycling process, and without an additional purification step.

Another object of the invention is an emulsion containing the core-sheath-shell polymer particles of the invention.

In the context of the invention, an emulsion containing polymer particles, as used herein, refers to an aqueous composition having discrete, water-insoluble polymer particles dispersed therein.

According to a particular embodiment, the emulsion containing core-sheath-shell polymer particles of the invention comprises from 10 to 100% by weight of polymer particles according to the invention, preferably from 15 to 80%, more preferably from 20 to 70% by weight, even more preferably from 25 to 60% by weight.

According to a particular embodiment, the emulsion containing core-sheath-shell polymer particles of the invention comprises impurities coming or derived from the recycled monomer used to obtain said particles.

When the recycled monomer used to obtain the emulsion containing core-sheath-shell polymer particles of the invention is methyl methacrylate, said emulsion preferably comprises from 20 ppm to 30.000 ppm of methyl isobutyrate, more preferably from 50 ppm to 20.000 ppm, even more preferably from 100 ppm to 10.000 ppm, even more preferably from 200 ppm to 8.000 ppm, even more preferably from 400 ppm to 7.000 ppm, even more preferably from 500 ppm to 6.000, ppm even more preferably from 700 ppm to 5.000 ppm, even more preferably from 900 ppm to 4.000 ppm, even more preferably from 1.000 ppm to 3.500 ppm, even more preferably from 1.500 ppm to 3.000 ppm.

When the recycled monomer used to obtain the emulsion containing core-sheath-shell polymer particles of the invention is methyl methacrylate, said emulsion preferably comprises from 10 ppm to 10.000 ppm by weight of methyl propanoate, more preferably from 50 ppm to 9.000 ppm, even more preferably from 80 ppm to 8.000 ppm, even more preferably from 100 ppm to 7.000 ppm, even more preferably from 200 ppm to 6.000 ppm, even more preferably from 400 ppm to 5.000 ppm, even more preferably from 600 ppm to 4.000 ppm, even more preferably from 800 ppm to 3.500 ppm, even more preferably from 1.000 ppm to 3.000 ppm, even more preferably from 1.500 ppm to 2.500 ppm.

When the recycled monomer used to obtain the emulsion containing core-sheath-shell polymer particles of the invention is methyl methacrylate, said emulsion preferably comprises from 0.1 ppm to 15.000 ppm by weight of methyl pivalate, more preferably from 1 ppm to 10.000 ppm, even more preferably from 10 ppm to 8.000 ppm, even more preferably from 50 ppm to 7.000 ppm, even more preferably from 80 ppm to 6.000 ppm, even more preferably from 100 ppm to 5.000 ppm, even more preferably from 200 ppm to 4.000 ppm, even more preferably from 400 ppm to 3.500 ppm, even more preferably from 500 ppm to 3.000 ppm, even more preferably from 1.000 ppm to 2.500 ppm.

When the recycled monomer used to obtain the emulsion containing core-sheath-shell polymer particles of the invention is styrene, said emulsion preferably comprises from 50 ppm to 18.800 ppm by weight of ethylbenzene, preferably from 75 ppm to 10.000 ppm, more preferably from 100 ppm to 8.000 ppm, even more preferably from 150 ppm to 5.000 ppm, even more preferably from 200 ppm to 2500 ppm, even more preferably from 250 ppm to 1000 ppm, even more preferably from 300 ppm to 800 ppm..

When the recycled monomer used to obtain the emulsion containing core-sheath-shell polymer particles of the invention is styrene, said emulsion preferably comprises from 50 ppm to 18.800 ppm by weight of cumene, preferably from 75 ppm to 10.000 ppm, more preferably from 100 ppm to 8.000 ppm, even more preferably from 150 ppm to 5.000 ppm, even more preferably from 200 ppm to 2.500 ppm, even more preferably from 250 ppm to 1.000 ppm, even more preferably from 300 ppm to 800 ppm.

When the recycled monomer used to obtain the emulsion containing core-sheath-shell polymer particles of the invention is styrene, said emulsion preferably comprises from 100 ppm to 4.500 ppm by weight of xylene, preferably from 125 ppm to 4.000 ppm, more preferably from 150 ppm to 3.800 ppm, even more preferably from 180 ppm to 3.500 ppm, even more preferably from 200 ppm to 3.000 ppm, even more preferably from 220 ppm to 2.500 ppm, even more preferably from 250 ppm to 2.000 ppm, even more preferably from 280 ppm to 1.500 ppm, even more preferably from 300 ppm to 1.000 ppm.

The above impurities present in the core-sheath-shell polymer particles of the invention come or derive from the recycled monomers. Styrene according to the invention, used to make said waterborne polymer composition. For example, an emulsion A (the waterborne polymer composition) comprising 50% by weight of polymer made with recycled styrene comprising 1000 ppm of ethylbenzene, said emulsion A comprises 500 ppm of ethylbenzene. Another example is an emulsion B (the water-borne polymer composition) comprising 50% by weight of polymer made with recycled styrene comprising 1000 ppm of ethylbenzene, and a comonomer, methylmethacrylate (mass ratio between methyl methacrylate and styrene 1:1), said emulsion B comprises 250 ppm of ethylbenzene.

According to a particular embodiment, in the emulsion containing core-sheath-shell polymer particles of the invention, from 20 ppm to 30.000 ppm of methyl isobutyrate come or derived from the recycled methyl methacrylate used to make said core-sheath-shell polymer particles of the invention. According to a particular embodiment, in the emulsion containing core-sheath-shell polymer particles of the invention, from 10 ppm to 10.000 ppm by weight of methyl propanoate come or derived from the recycled methyl methacrylate used to make said core-sheath-shell polymer particles of the invention. According to a particular embodiment, in the emulsion containing core-sheath-shell polymer particles of the invention, from 0.1 ppm to 15.000 ppm by weight of methyl pivalate come or derived from the recycled methyl methacrylate used to make said core-sheath-shell polymer particles of the invention. The same preferred ranges described above, apply.

According to a particular embodiment, in the emulsion containing core-sheath-shell polymer particles of the invention, from 50 ppm to 18.800 ppm by weight of ethylbenzene come or derived from the recycled styrene used to make said core-sheath-shell polymer particles of the invention. According to a particular embodiment, in the emulsion containing core-sheath-shell polymer particles of the invention, from 50 ppm to 18.800 ppm by weight of cumene come or derived from the recycled styrene used to make said core-sheath-shell polymer particles of the invention. According to a particular embodiment, in the emulsion containing core-sheath-shell polymer particles of the invention, from 100 ppm to 4.500 ppm by weight of xylene come or derived from the recycled styrene used to make said core-sheath-shell polymer particles of the invention. The same preferred ranges described above, apply.

According to a particular embodiment, the core-sheath-shell polymer particles of the invention are obtained from at least one biobased monomer.

According to the invention, the biobased monomer is at least partially of renewable and non-fossil sources. According to the invention, the expression "at least partly of renewable and non-fossil sources" means that the biobased monomer has a biobased carbon content preferably between 10% by weight and 100% by weight relative to the total weight of carbon of said monomer.

The biobased carbon content is measured according to ASTM D6866-22 Standard.

In the context of the invention, the ASTM D6866-22 standard is used to characterize the biobased nature of a chemical compound, and to determine the biobased carbon content of said compound. The value is expressed as a percentage by weight of biobased carbon relative to the total weight of carbon in said compound.

ASTM D6866-22 is a test method that teaches how to experimentally measure the bio-based carbon content of solids, liquids, and gaseous samples by radiocarbon analysis.

This standard mainly uses the technology of the AMS (Accelerator Mass Spectrometry). This technique is used to naturally measure the radionuclides present in a sample, in which the atoms are ionized, then accelerated to high energies, then separated, and individually counted in Faraday collectors. This high-energy separation is extremely effective at filtering out isobaric interference, so the AMS is able to accurately measure the abundance of carbon-14 by compared to carbon 12 (14C/12C) to an accuracy of $1.10^{15}$.

This standard makes it possible to directly distinguish carbon atoms from contemporary carbon from carbon atoms of fossil origin.

The biobased monomer has preferably a biobased carbon content comprised between 20% by weight and 100% by weight relative to the total weight of carbon of said monomer, more preferably more than 30%, even more preferably more than 50%, even more preferably more than 70%, even more preferably more than 90% by weight. In a preferred mode of the invention the biobased monomer has a biobased carbon content of 100% by weight.

The biobased monomer is preferably chosen from the list comprising ethylacrylate, lauryl (meth)acrylate, tetrahydrafurfuyl (meth)acrylate, stearyl (meth)acrylate, n-octyl (meth)acrylate, methyl methacrylate, 2-octyl (meth) acrylate, isobutyl (meth)acrylate, vanillin methacrylate, neopentyl glycol diacrylate, trimethyloyl propane triacrylate, pentaerythritol tetraacrylate, dipentaerythritol pentaacrylate.

The biobased monomer is more preferably ethylacrylate, lauryl (meth)acrylate, or a mixture thereof.

In a particular embodiment, the at least one biobased monomer is comprised in the core and/or in the sheath and/or in the shell of said core-sheath-shell polymer particles.

According to a particular embodiment, the core-sheath-shell polymer particles of the invention are obtained:

- from 1 to 99.9 % by weight of at least one recycled monomer;

- from 0.1 to 99% by weight of at least one additional monomer.

According to a particular embodiment, the core-sheath-shell polymer particles of the invention are obtained:

- from 1 to 99.8 % by weight of at least one recycled monomer;

- from 0.1 to 98,9% by weight of at least one additional monomer;

- from 0.1 to 50% by weight of at least one biobased monomer.

According to the invention, additional monomers may be chosen from the list comprising ethylenically unsaturated monomers preferably selected from the list comprising alkyl acrylates or alkyl methacrylates such as linear, branched or cycloaliphatic Ci-C22-alkyl(meth)acrylates, methyl(meth)acrylate, ethyl(meth)acrylate, n-butyl(meth)acrylate, isobutyl-(meth)acrylate, lauryl(meth)acrylate, 2-ethylhexyl(meth)acrylate, stearyl-(meth)acrylate, cyclohexyl(meth) acrylate, isobornyl(meth)acrylate, 2-octyl- (meth)acrylate and tert-butyl(meth)acrylate, aryl(meth)acrylates, benzyl(meth) acrylate and phenyl(meth)- acrylate, tetrahydrofurfuryl(meth)acrylate, methoxyethoxyethyl(meth)- acrylate, 1 - butoxypropyl(meth)acrylate,cyclohexyloxymethyl(meth)acrylate,methoxymethoxyethyl(meth)acrylate, benzyloxymethyl(meth)acrylate,furfuryl-(meth)acrylate, 2-butoxy ethyl (meth)acrylate, 2-ethoxyethyl(meth)acrylate, allyloxymethyl(meth)acrylate, 1 -ethoxybutyl(meth)acrylate, 1 -ethoxyethyl-(meth)acrylate, ethoxymethyl(meth)acrylate, poly(ethyleneglycol)methyl-ether(meth)acrylate, and poly(propyleneglycol) methylether (meth)acrylate or aminoalkyl(meth)acrylates such as N,N-dimethyl aminoethyl (meth)acrylate, 2- trimethylammoniumethyl(meth)acrylatchloride and N,N-dimethyl amino-propyl(meth)acrylate, oxiranyl(meth)acrylates such as 2,3-epoxy butyl(meth)acrylate, 3,4-epoxy-butyl(meth)acrylate and glycidyl(meth)acrylate, styrenes, substituted styrenes such as a-methylstyrenes, 4-methylstyrenes, 4-vinylbenzoic acid and sodium-4-vinylbenzene sulfonate, vinylesters of carboxylic acids comprising 1 to 20 carbon atoms, especially vinylacetate, vinylesters of versatic acids such as VeoVa-10, 10 (meth)acrylamides, acid functional monomers such as acrylic acid, methacrylic acid, itaconic acid, crotonic acid, fumaric acid, n-butylacrylic acid, iso- butylacrylic acid, laurylacrylic acid, 2-ethylhexylacrylic acid, stearylacrylic acid, cyclohexylacrylic acid, isobornylacrylic acid and tert-butylacrylic acid.

A second object of the invention is a process for preparing an emulsion containing core-sheath-shell polymer particles, said polymer particles being obtained from at least one recycled monomer, said process comprising the steps of:

(i) emulsion polymerizing a core (A) from a core monomer system;

(ii) encapsulating said core (A) with a sheath polymeric layer (B) by emulsion polymerizing a sheath monomer system (E1);

(iii) encapsulating said core-sheath particles with a polymeric shell (C) by emulsion polymerizing a shell monomer system (E2);

(iv) neutralizing and swelling the resultant core-sheath-shell polymer particles,

wherein at least one monomer used in said process is a recycled monomer.

In the process of the invention, the nature of at least one recycled monomer, the nature and the amount of impurities are the same as disclosed in the previous part of the description.

In the process of the invention, the recycled monomer is preferably methyl methacrylate comprising from 200 ppm to 30.000 ppm by weight of methyl isobutyrate, and/or recycled styrene comprising from 100 ppm to 25.000 ppm by weight of ethylbenzene

According to a particular embodiment, in step i) of the process of the invention, the core monomer system comprises, as polymerized units, from 5 to 100 percent by weight, based on the weight of the core, of hydrophilic monoethylenically unsaturated monomer containing acid functionality, and from 0 to 95 percent by weight, based on the weight of the core, of at least one nonionic monoethylenically unsaturated monomer.

Step i) of emulsion polymerizing a core (A) from a core monomer system can typically be carried out in water,. Step ii) of the process of the invention can typically be carried out with a water-soluble polymerization catalyst.

According to a particular embodiment, in step ii) of the process of the invention, the sheath monomer system (E1) comprises, as polymerized units, at least 20 % by weight of a hydrophilic monoethylenically unsaturated monomer, at least 20 % by weight of a hydrophobic monoethylenically unsaturated monomer, and 1% to 20 % by weight of a hydrophilic monoethylenically unsaturated monomer containing acid functionality, each based on the total weight of the sheath polymeric layer.

According to a particular embodiment, in step iii) of the process of the invention, the shell monomer system (E2) comprises, as polymerized units, from 1 to 10 percent by weight, of hydrophilic monoethylenically unsaturated monomer containing acid functionality, and from 90 to 99 percent by weight, of at least one nonionic monoethylenically unsaturated monomer, each based on the total weight of the polymeric shell.

According to a particular embodiment, step iv) of the process of the invention takes place with a volatile, fixed or permanent base in the presence of a monomer-solvent-system.

According to a particular embodiment, in step iv) of the process of the invention the monomer-solvent-system comprises from 5-50 % by weight of the at least one nonionic monoethylenically unsaturated monomer of said shell monomer system (E2), said monomer acting as a solvent.

According to a particular embodiment, in step iv) of the process of the invention the monomer-solvent-system can be added before, after or during the addition of the base.

According to a particular embodiment, in the process of the invention, a water-soluble polymerization catalyst in a total amount of 0.05 to 0.45 % by weight, based on the total amount of monomers in E1 plus E2, is either fed in parallel with the sheath monomer system E1 or is fed right before emulsion polymerization of E1 in step (ii) starts.

According to a particular embodiment, the process of the invention comprises after step iv) an additional step v) of reducing the level of said at least one nonionic monoethylenically unsaturated monomer of said monomer-solvent-system in step (iv) by polymerizing the monomer to less than 10,000 ppm, based on polymer solids, so as to produce an emulsion of particles.

The main polymerization reaction according to the present invention resides in encapsulating the acidic, alkali swellable core polymer (or seed) with a sheath that serves as a bridge to further encapsulate said core-sheath with a shell. In accordance with the present invention, a catalyst, within certain tailored limits, is dosed together with sheath monomer system E1 or shot-in right before E1 addition starts and that catalysts is all and the only catalyst present in reacting the monomer systems E1 and E2, with no further catalysts being added or shot at any moment of the reaction after that catalyst has been added. Thus, no inhibitors or scavengers are added at any moment of the whole reaction from beginning to end. To that extent, reacting or not said at least one nonionic monoethylenically unsaturated monomer of said monomer-solvent-system in step (iv), preferably styrene monomer, that has acted as solvent in the swelling step, is not a fundamental part of the process for preparing the polymeric particles as such.

If the polymerization process is run according to the present invention, after the monomer systems E1 (sheath) and E2 (shell) have been polymerized within the given ranges, then both the monomer-solvent-system, preferably styrene monomer, and the swelling neutralizing agent (preferably NaOH, KOH) are present together in order to perform the swelling of particles by neutralizing the core. If one of them is not present, no swelling takes place and, consequently, no opacifying properties are developed. But if both are present, the shell becomes permeable to the base which can diffuse through the shell and the sheath, neutralizing the core, provoking its expansion, and thus the particles swell. As mentioned, in step (iv) the monomer-solvent-system can be added before, after or during the addition of the base.

Usually, the swollen particles have a diameter from about 300 nm to about 1000 nm, depending on the intended application (paints, paper, etc.). When used as opacifying agent for paints, diameters from about 300 nm to 500 nm are preferred. The diameter of the particles is measured via Dynamic Light Scattering technique. The results are interpreted in terms of 'volume ordered by area' displaying a volume-based particle size distribution.

If this product is dried, water will evaporate as free monomer of the monomer-solvent-system, preferably styrene monomer, also will, and an opacifying agent is obtained which has all desired properties. When not performing above step (v), the product smells of monomer. Therefore, in step (v) at the end of the process, free monomer is removed by polymerization. Therefore, when setting the limits for catalyst amounts, surfactant amounts, ratio core-to-shell, level of functional acid monomer, etc., it is always referred to these amounts as a percentage on monomers in the monomer systems E1+E2, or, in other words, "based on (actual) monomers to be polymerized" (i.e. monomers present in E1+E2).

In the process of the invention, the core, the sheath polymeric layer, and/or the shell may be made in a single stage or step of the sequential polymerization or may be made by a plurality of steps in sequence following the polymerization.

Usually, the sheath monomer system (E1) is polymerized at least to about 90% before the shell monomer system (E2) begins to be polymerized. The total amount of sheath polymeric layer (B) is by weight from 1 to 5 times the weight of the core. The core-sheath particle after step (ii) whether obtained by a single stage process or a process involving several stages, has usually an average particle size of from 100 nm to 300 nm, preferably from 150 nm to 250 nm, diameter in unswollen condition.

The presence of acid-functional monoethylenically unsaturated monomer in the shell (C) may serve several functions:

(1) stabilizing of the final multi-stage emulsion polymer particle; and

(2) compatibilizing the shell with the previously formed stage of the multistage emulsion polymer particle.

According to a particular embodiment, a water-soluble polymerization catalyst in a total amount of 0.05 to 0.45 % by weight, based on the total amount of monomers in E1 plus E2, is employed in the process of the invention. When performing the process of the present invention on an industrial scale, i.e. in reactors with capacities of about 10 000 to 50 000 kg, the water-soluble polymerization catalyst is preferably employed in a total amount of 0.10 to 0.30 % by weight, based on the total amount of monomers in E1 plus E2. The reason for that resides in the enhanced efficiency of such catalysts under real plant conditions when compared to their employment under laboratory conditions or in pilot plants.

The catalyst is either fed in parallel with the sheath monomer system E1 into the polymerization reactor or is fed into the polymerization reactor right before emulsion polymerization of E1 in step (ii) starts.

The water-soluble polymerization catalyst is preferably a water-soluble free radical initiator utilized in the aqueous emulsion polymerization. Suitable water-soluble free radical initiators include hydrogen peroxide; tert.-butyl peroxide; diazo initiators like V-50 from Wako Pure Chemical Industries, Ltd.; alkali metal persulfates such as sodium, potassium and lithium persulfate; ammonium persulfate; and mixtures of such initiators with a reducing agent. Reducing agents include: sulfites, such as alkali metal metabisulfite, hydrosulfite, and hyposulfite; sodium formaldehyde sulfoxylate; and reducing sugars such as ascorbic acid and isoascorbic acid.

In step (ii) and/or step (iii) of the process of the invention one or more nonionic or anionic emulsifiers, or surfactants, may be used, either alone or together. Examples of suitable nonionic emulsifiers include tert-octylphenoxyethylpoly(39)-ethoxyethanol, dodecyloxypoly(10)ethoxyethanol, nonylphenoxyethyl-poly(40)ethoxyethanol, polyethylene glycol 2000 monooleate, ethoxylated castor oil, fluorinated alkyl esters and alkoxylates, polyoxyethylene (20) sorbitan monolaurate, sucrose monococoate, di(2-butyl)phenoxypoly(20)ethoxyethanol, hydroxyethylcellulosepolybutyl acrylate graft copolymer, dimethyl silicone polyalkylene oxide graft copolymer, polyethylene oxide)poly(butyl acrylate) block copolymer, block copolymers of propylene oxide and ethylene oxide, 2,4,7,9-tetramethyl-5-decyne-4,7-diol ethoxylated with 30 moles of ethylene oxide, N-polyoxyethylene(20)lauramide, N-lauryl-N-polyoxyethylene(3)amine and poly(10)ethylene glycol dodecyl thioether. Examples of suitable anionic emulsifiers include sodium lauryl sulfate, sodium dodecylbenzenesulfonate, potassium stearate, sodium dioctyl sulfosuccinate, sodium dodecyldiphenyloxide disulfonate, nonylphenoxyethylpoly(I)ethoxyethyl sulfate ammonium salt, sodium styrene sulfonate, sodium dodecyl allyl sulfosuccinate, linseed oil fatty acid, sodium or ammonium salts of phosphate esters of ethoxylated nonylphenol, sodium octoxynol-3-sulfonate, sodium cocoyl sarcocinate, sodium 1-alkoxy-2-hydroxypropyl sulfonate, sodium alpha-olefin (C14-C16)sulfonate, sulfates of hydroxyalkanols, tetrasodium N-(1,2-dicarboxy ethyl)-N-octadecylsulfosuccinamate, disodium N-octadecylsulfosuccinamate, disodium alkylamido polyethoxy sulfosuccinate, disodium ethoxylated nonylphenol half ester of sulfosuccinic acid and the sodium salt of tert-octylphenoxyethoxypoly(39)ethoxyethyl sulfate.

The one or more surfactants are generally used at a level of from 0 to 3 percent based on the weight of the multi-stage polymer. The one or more surfactants can be added prior to the addition of any monomer charge, during the addition of a monomer charge or a combination thereof. In certain monomer/emulsifier systems for forming the shell, the tendency to produce gum or coagulum in the reaction medium may be reduced or prevented by the addition of about 0.05% to about 2.0% by weight, based on total weight of the shell polymer, of emulsifier without detriment to the deposition of the polymer formed on the previously formed particles.

By carrying out the emulsion polymerization while maintaining low levels of emulsifier, the subsequent stages of polymer-formation deposit the most-recently formed polymer on the existing dispersed polymer particles resulting from the preceding step or stage. As a general rule, the amount of emulsifier should be kept below that corresponding to the critical micelle concentration for a particular monomer system, but while this limitation is preferable and produces a unimodal product, in some systems the critical micelle concentration of the emulsifier may be exceeded somewhat without the formation of an objectionable or excessive number of dispersed micelles or particles. It is for the purpose of controlling the number of micelles during the various stages of polymerization so that the deposition of the subsequently formed polymer in each stage occurs upon the dispersed micelles or particles formed in the previous stages, that the concentration of emulsifier is kept low.

The viscosity-average molecular weight of the polymer formed in a given stage may range from 100,000, or lower if a chain transfer agent is used, to several million molecular weight. If it is desired to produce a core having a molecular weight in the lower part of the range, such as down to as low as about 20,000, it is frequently most practical to do so by avoiding any polyethylenically unsaturated monomers and using a chain transfer agent instead, such as 0.05% to 2% or more thereof, examples being alkyl mercaptans, such as sec-butyl mercaptan.

The weight ratio of core to the sheath is generally in the range of from 1:0.5 to 1:10, preferably in the range of from 1:1 to 1:5. The weight ratio of core to shell is generally in the range of from 1:5 to 1:20, preferably in the range of from 1:8 to 1:15. Preferably, the weight of the polymeric shell (C) constitutes more than 50% of the total monomer weight of the particles. When trying to decrease the dry density of the final product, is preferred to have as little shell as possible while still encapsulating the core.

In order to minimize the dry density of the final product, it is preferable to deposit only as much shell polymer as is needed to fully encapsulate the core. When the hydrophilic core polymer is fully encapsulated, it does not titrate with alkali metal bases under normal analytical conditions of about 1 hour and at room temperature. The extent of encapsulation can be determined by removing samples during the course of the shell polymerization and titrating with sodium hydroxide.

In step (iv) suitable swelling agents include those which, in the presence of the multistage emulsion polymer and monomer, are capable of permeating the shell and swelling the core. Swelling agents may be aqueous or gaseous, volatile or fixed bases or combinations thereof.

Suitable swelling agents in step (iv) of the present invention include volatile bases such as ammonia, ammonium hydroxide, preferably aqueous ammonium hydroxide, and volatile lower aliphatic amines, such as morpholine, trimethylamine, and triethylamine, and the like; fixed or permanent bases such as potassium hydroxide, lithium hydroxide, zinc ammonium complex, copper ammonium complex, silver ammonium complex, strontium hydroxide, barium hydroxide and the like. Sodium hydroxide and potassium hydroxide are preferred.

The amount of swelling agent can be less than, equal to or greater than the amount needed to provide for complete neutralization of the core. Preferably, the amount of swelling agent is in the range of from 75 to 150 percent, based on the total amount of acid contained in the core plus sheath plus shell,i.e. relative to the core, sheath and shell in total.

Swelling is generally very efficient under conditions of elevated temperature and in the presence of monomer-solvent-system. Under these conditions, swelling is generally complete within 30 minutes, preferably within 20 minutes, most preferably within 10 minutes of adding the one or more swelling agents.

The core polymer of the multistage emulsion polymer swells when the core is subjected to a basic swelling agent that permeates the shell to at least partially neutralize the hydrophilic-functionality of the core, preferably to a pH of at least about 6 to at least about 10, and thereby results in swelling by hydration of the hydrophilic core polymer. The swelling, or expansion, of the core may involve partial merging of the outer periphery of the core into the pores of the inner periphery of the shell and also partial enlargement or bulging of the shell and the entire particle overall.

In accordance with the present invention, said swelling takes place in the presence of a monomer-solvent-system comprising from 5-50 % by weight, preferably 15-30 % by weight, more preferably 20-30 % by weight, of the at least one nonionic monoethylenically unsaturated monomer in said shell monomer system (E2), said monomer acting as a solvent, which, in turn, assists in the penetration of the base through the created polymer layers down to the core. Said monomer-solvent-system of step (iv) can be added before, after or during the addition of the base. Preferably, said monomer is styrene.

The presence of said monomer in step (iv) is helpful in facilitating the swelling of the multistage polymer, whether by plasticizing the shell, aiding in the transport through the shell or a combination thereof.

However, the presence of monomer is detrimental when trying to maximize swelling and minimize the dry bulk density of the swollen multistage emulsion polymer. Accordingly, and in order to avoid any smell of the final product caused by the presence of said monomer, after swelling the multistage emulsion polymer in the presence of both monomer-solvent system and swelling agent, the level of said monomer of the monomer-solvent system is reduced to less than 10,000 ppm, preferably to less than 5,000 ppm based on polymer solids. This is accomplished by polymerizing the monomer of the monomer-solvent-system used in step (iv). Preferably, in said step (v) of the present invention, said monomer-solvent-system is polymerized by redox catalyst initiation after the swelling step is completed. Those redox catalysts are well known in the art. A typically used system is tBHP/SSF. Since the polymerization takes place in the shell, the resulting polymer, preferably polystyrene, becomes a constituent of the shell (C) of the particles.

According to a particular embodiment, the process of the invention can comprise before step i), preliminary steps enabling to provide a recycled monomer by using a recycling process, wherein said recycled monomer can be chosen from methyl methacrylate, styrene, or its dimer, or its trimer. Said preliminary steps can comprise:

- providing a polymer comprising monomer unit;

- recycling said polymer in a recycling process to obtain a recycled monomer;

wherein the recycling process preferably does not comprise a purification step.

According to a particular embodiment, the at least one recycled monomer used in the process of the invention is substantially not purified.

The core-sheath-shell polymer particles of the invention or an emulsion containing the core-sheath-shell polymer particles of the invention can be used as opacifying agents.

The core-sheath-shell polymer particles of the present invention are thus useful in coating compositions, such as aqueous-based paint and paper coatings. The voided polymer particles produced by the method of this invention impart improved gloss, brightness and opacity to paper coating formulations to which they are added. Also, the voided polymer particles produced by the method of this invention impart opacity to aqueous coating compositions, such as paints, to which they are added. The core-sheath-shell polymer particles of the present invention can also be used as textile polymers in finishing, in coating, in flocking, or as textile auxiliaries in pretreatment, in dyeing, in printing, or in finishing, or as leather additive in wet end or in finishing.

The present invention will be further illustrated in the following examples.

## Examples

### Example 1: Comparative Example

The process was performed as follows: Firstly, 340 g reaction water was added into the polymerization reactor which was then heated to 85-92° C. Following this, the catalyst (1 g sodium persulfate dissolved in 24.2 g of water) was added followed by 68 g of seed particles prepared by conventional means. These seed particles were composed of 65% by weight methyl methacrylate and 35% by weight methacrylic acid. The mean particle size has been 120-170 nm, solids content 30%. When adding the seed particles, the temperature decreased to 75-82° C.

Subsequently, feeding of the Preemulsion-I (E1), i.e. the sheath monomer system composed of 17 g of water, 0.5 g Rhodacal DS-10 (15%), 3 g methacrylic acid, 20 g methyl methacrylate and 20 g styrene, was started; in the first 5-20 minutes the flow rate has been ½ of normal rate, then normal flow rate during 45 min. The reaction temperature was between 80-84° C., reaction period: 40-60 min. After the feeding was completed, it was waited 15-30 minutes till the temperature was stable at 80-82° C.

Following this, the feeding of the shell monomer system (E2), i.e. Preemulsion-II, composed of 92 g of water, 2.67 g Rhodacal DS-10 (15%), 4 g methacrylic acid, 200 g styrene, 0.4 g allyl methacrylate and 1 g linseed oil fatty acid was started at 80-82° C and gradually increased to 92-94° C. The reaction period was 50-70 min. Then, the temperature went down to 88-90° C.

Following this, the Preemulsion-III (E3), i.e. the monomer-solvent-system composed of 16 g water, 0.67 g Rhodacal DS-10 (15%), and 50 g styrene, was added in 5-20 minutes. Subsequently, the feeding of the neutralizing agent (8.8 g sodium hydroxide (50%) dissolved in 167.2 g water) was started, taking about 30-60 minutes. The emulsion was kept at 85-95° C during all the addition. Then, the redox catalyst was added at 80-88° C (first 0.8 g of t-Butylhydroxyperoxyde dissolved in 6.2 g of water, then 0.8 g Sodium sulfoxylate dissolved in 11.2 g of water). A temperature increase of 2-15° C to 90-95° C was observed. Then, the emulsion was cooled down. Below 40° C a biocide (1 g Acticide® MV commercially available from Thor GmbH dissolved in 2 g of water) was added. Flush water was added as 20 g. After final work-up, the respective sample was taken out for analytical studies. The analytical specifications gave the following results in table 1:

Table 1:

| Analytical Specifications | | Results |
|---|---|---|
| Aspect: | white opaque emulsion | OK |
| Wet | white | white |
| Dry film | white powder | white powder |
| Solids (%) | 29-31 | 30 |
| Viscosity Sp rpm | max 500, LVT 2/60 | 50 |
| pH | 7.5-8.5 | 8.2 |
| Gel, 82 mesh (g/l): | <0.05 | <0.05 |
| Powdering | soft, equal to standard | OK |
| Opacity | equal to standard (10) | 10 |
| Mechanical stability | good | OK |
| Dry density | 0.550-610 g/cm3 | 0.573 |
| Ps (nm) | 380-480 | 436 |

**Example 2: Recycled methyl methacrylate (RMMA) used in hollow-sphere polymer synthesis**

The reaction was done according to Example 1, but recycled methyl methacrylate was used in Preemulsion-I (E1) instead of virgin methyl methacrylate.

**Example 3: Recycled methyl methacrylate (RMMA) used in seed, recycled styrene (RSTY) and recycled methyl methacrylate (RMMA) used in hollow-sphere polymer synthesis**

The reaction was done according to Example 1, but recycled methyl methacrylate was used both in seed particles and in Preemulsion-I (E1) instead of virgin methyl methacrylate and recycled styrene was used in Preemulsion-I (E1), Preemulsion-II (E2) and Preemulsion-III (E3) instead of virgin Styrene.

**Example 4: Recycled methyl methacrylate (RMMA) used in both seed and hollow-sphere polymer synthesis**

The reaction was done according to Example 1, but recycled methyl methacrylate was used both in seed paricles and in Preemulsion-I (E1) instead of virgin methyl methacrylate.

**Example 5: Recycled methyl methacrylate (RMMA) used in seed**

The reaction was done according to Example 1, but recycled methyl methacrylate was used in seed particles instead of virgin methyl methacrylate.

**Example 6: Recycled styrene (RSTY) used in hollow-sphere polymer synthesis**

The reaction was done according to Example 1, but recycled styrene was used in Preemulsion-I (E1), Preemulsion-II (E2) and Preemulsion-III (E3) instead of virgin styrene.

In examples 2 to 6, the impurities levels in recycled styrene (RSTY) and recycled methyl methacrylate (RMMA) are described in Table 2 and 3 below.

Table 2:

| Impurities in Recycled styrene (ppm) | |
|---|---|
| Ethyl benzene | 1935 |
| Cumene | 835 |
| Xylene (ortho, meta, para) | 1452 |
| Toluene | 91 |
| Benzene | 79 |
| 2,4,6-triphenyl-1-hexene | 169 |
| 2,4-diphenyl-1-butene | 271 |
| Vinyl toluene | 215 |
| 1,3-diphenylpropane | 293 |
| Alpha-methyl styrene | 9575 |

Table 3:

| Impurities in Recycled methyl methacrylate (ppm) | |
|---|---|
| Methyl isobutyrate | 19810 |
| methylacrylate | 9000 |
| methyl propanoate | 3270 |
| ethylacrylate | 4840 |
| methyl pivalate | 6020 |

**Example 7: Comparison of the properties of the emulsions containing core-sheath-shell polymer particles obtained in examples 1 to 6**

Table 4:

| Analytical specifications | Ex. 1 (Control) | Ex. 2 RMMA | Ex. 3 RMMA & RSTY, RMMA in seed | Ex. 4 RMMA in seed and emulsion. | Ex. 5 RMMA in seed. | Ex. 6 RSTY |
|---|---|---|---|---|---|---|
| **Aspect** | white opaque emulsion | white opaque emulsion | white opaque emulsion | white opaque emulsion | white opaque emulsion | white opaque emulsion |
| **Dry film** | white powder | white powder | white powder | white powder | white powder | white powder |
| **Solids (%)** | 30.5 | 30.0 | 29.9 | 30.1 | 30.4 | 30.3 |
| **Viscosity, LVT 2/60 (cps)** | 140 | 111 | 96 | 94 | 123 | 161 |
| **pH** | 8.4 | 8.0 | 8.0 | 8.24 | 8.0 | 8.0 |
| **Grit, 82 mesh (g/L)** | 0.0104 | 0.0112 | 0.0092 | 0.0114 | 0.0096 | 0.0088 |
| **Powdering** | Soft, equal to standard | Soft, equal to standard | Soft, equal to standard | Soft, equal to standard | Soft, equal to standard | Soft, equal to standard |
| **Opacity %** | 97.4 | 97.9 | 97.6 | 97.8 | 97.7 | 97.9 |

(continued)

| Analytical specifications | Ex. 1 (Control) | Ex. 2 RMMA | Ex. 3 RMMA & RSTY, RMMA in seed | Ex. 4 RMMA in seed and emulsion. | Ex. 5 RMMA in seed. | Ex. 6 RSTY |
|---|---|---|---|---|---|---|
| Mechanical stability | good | good | good | good | good | good |
| Dry density | 0.581 | 0.617 | 0.593 | 0.581 | 0.581 | 0.605 |
| Particle size (nm) | 415 | 398 | 421 | 428 | 420 | 408 |

Description of the analytical tests:

Percentage of solids: A container in use to measure solid content of a polymer sample is weighed and registered as T1. Then a small amount of polymer sample is loaded to the container, weighed and registered as T2. Containers are placed into an oven at 150 C. After 20 min containers are removed from the oven and let to cool at room temperature. It is registered as T3 after weighed. Solid content is calculated by using the following equation.

$$\text{Solid Content \%} = \frac{T^3 - T^1}{T^2 - T^1} \times 100$$

Viscosity: Brookfield and Krebs Stormer viscometers are commonly used to measure viscosity, at a specific temperature, under defined shear conditions.

Brookfield viscometer gauges the torque needed to rotate a spindle in a fluid. By altering speeds and spindles, a range of viscosities can be measured. Viscosity of paint can be measured by a Brookfield viscometer at 25°C as cP (centipoises).

Krebs viscometer is also utilized to measure the viscosity of paints according to ASTM D562. The Krebs Stormer viscometer indeed stands as a standard tool in the paint industry for assessing viscosity, providing a convenient means to measure resistance in paint at a rotation speed. The resistance created by the paint is measured and expressed in Krebs units, or Kus. The higher the KU number, the more viscous is the paint. This method is especially beneficial for ensuring consistency in paint production and exploring new coating formulations. Approximately, 300 g of paint at 25°C in a container is used for measurements.

Initial Viscosity Tests: The initial flow and stirring resistance of paint are measured using Brookfield and Krebs viscometers, providing viscosity readings in millipascal-seconds (mPa.s) and Krebs Units (KU), respectively.

Overnight Viscosity Tests: Viscosity is reassessed after the paint rests overnight, with Brookfield and Krebs measurements indicating any changes in flow resistance or consistency.

pH: To measure pH effectively (according to ISO 976), a pH meter is used (Schott LAB 850 type). The sample is put on a clean glass beaker for measurement. The pH meter is calibrated according to instructions. Sample to be measured should be well-mixed and homogeneous. The probe of pH meter is immersed into the sample for the specified time and pH is measured.

Grit: 500 mL of polymer sample is placed in the measure. A 82 mesh (180 micron) stainless steel strainer is precisely weighed and registered as g1. Polymer sample is filtered through strainer under water stream. The strainer is dried in the oven at 150 C for 20 min. After cooling down it is weighed and registered as g2. Grit content is calculated by using the following equation in g/L.

$$\text{Grit content} = (g2-g1) \times 2$$

Powdering: A couple of drops of the polymer dispersion to be analyzed are placed onto a glass substrate. After drying at room temperature, the polymer should have a powdering behaviour.

Opacity: The test was done according to BS EN ISO 6504-3. The paints were applied to black-white contrast card to achieve a wet film thickness of 200 microns. The film width should be at least 70mm. Paint films should be cured at least for 16 hours at (23±2)°C temperature and (50±5)% relative humidity. After 7 days of curing under room conditions, opacity was measured by measuring the whiteness of the paint over the black surface using a spectrophotometer, ratioed against the whiteness on the white surface, and the result is multiplied by 100 to yield a percentage value.

Mechanical stability: The polymer sample is dropped into the palm. Rubbing is done by applying pressure by finger. The resulting film should not be broken. Too much finger pressure should not be applied during this process. As a result, it should be determined as "Good by hand / Not good by hand".

Dry density: To a 50 milliliter ("ml") centrifuge tube was added 6.3 grams of polymer solids. Deionized water was added to the centrifuge tube to provide a total of 35 grams ("g") of material in the centrifuge tube which corresponds to 18 percent by weight of polymer solids. The tube was placed in a centrifuge spun at 18,000 revolutions per minute for 120 minutes. The supernatant was decanted and weighed. The dry density was then determined by the following equations:

$$\text{Dry Density} = \% \text{ Poly} \times d$$

$$\% \text{ Poly} = 1 - \% \text{ H}_2\text{O}$$

$$\% \text{ H}_2\text{O} = V_{H2O} / (V_{H2O} + V_P) = ((V_T - S_{H2O}) \times F_R - V_P) / ((V_T - S_{H2O}) \times F_R)$$

$$V_{H2O} = (V_T - S_{H2O}) \times F_R - V_P$$

$$V_{H2O} + V_P = (V_T - S_{H2O}) \times F_R$$

$$F_R = (V_{H2O} + V_P) / (V_{H2O} + V_P + I_{H2O}) = (V_{H2O} + V_P) / \text{Hard Pack}$$

$$\text{Hard Pack} = V_T - S_{H2O} = (V_{H2O} + V_P) / F_R$$

where:

$W_T$ = total weight in tube = 35.0 grams

$V_{H2O}$ = Volume of water inside the particles

$I_{H2O}$ = Interstitial water volume

$d$ = polymer density = measured 1.084 g/cc

$V_P$ = Polymer volume (6.3 g/1.084 g/cc = 5.81 cc)

$V_T$ = total volume in tube = 35 g - 6.3 g solids = 28.7g or cc water + 5.81 cc polymer = 34.51 cc

$S_{H2O}$ = volume of supernate = weight of supernate

$\%_{H2O}$ = Percent water inside particles

$\%_{POLY}$ = Percent polymer in particles

$F_R$ = Packing constant, which is a correction corresponding to the fraction of volume solids in the hard pack. The following packing constant values were used based on the particle size of the polymer sample:

Table 5

| Particle Size Range (nm) | $F_R$ |
|---|---|
| <275 | 0.611 |
| 275-500 | 0.624 |
| 501-750 | 0.638 |

(continued)

| Particle Size Range (nm) | $F_R$ |
|---|---|
| 751-1300 | 0.645 |

The values of the packing constants used were based on density determinations (as described above) for unswollen polymer particles such that $V_{H2O}$ is zero. The packing constant, $F_R$ is defined as:

$$F_R = (V_{H2O} + V_P) / (V_{H2O} + V_P + I_{H2O}) = (V_{H2O} + V_P) / Hard\ Pack = V_P / Hard\ Pack$$

$V_P$ = Polymer volume (6.3 g/1.084 g/cc = 5.81 cc)

$I_{H2O}$ = Interstitial water volume = $(W_T - S_{H2O} - 6.3\ g) / 1.0\ g/cc$

$W_T$ = total weight in tube = 35.0 grams

$S_{HS}$) =weight of supemate

<u>Particle size:</u> The average particle size of samples is measured via Zetasizer Pro. Dynamic Light Scattering technique. Samples are diluted with 10 mM NaCl solution at room temperature. NaCl solution is used to stabilize the charge density around the particle. Then sample is transferred to the cuvette and placed into the device. The measurement is repeated 3 times and the average is taken. The results are interpreted in terms of 'volume ordered by area'.

**Example 8: Comparison of the properties of paints prepared from the core-sheath-shell polymer particles obtained in examples 1 to 6**

Composition of the paints:

Table 6:

| Component | Weight (g) | Key Function |
|---|---|---|
| Water | 18,5 | |
| Natrosol HR 250 | 0,3 | Thickener |
| Ammonia (25%) | 0,1 | pH Adjuster |
| Calgon N (10%) | 0,5 | Dispersant |
| Tafigel PUR 45 | 0,8 | Thickener |
| Dispersant K 850 | 0,6 | Dispersant |
| Agitan 280 | 0,3 | Defoamer |
| Propylene Glycol | 1,0 | Solvent |
| Texanol | 1,0 | Coalescent |
| Kronos 2310 | 12,0 | Pigment |
| Omyacarb 2 | 4,0 | Filler |
| Kaolin | 3,0 | Filler |
| **Orgal P 850 RR** | **25,0** | **Binder** |
| Water | 18,6 | |
| Agitan 280 | 0,1 | Defoamer |
| Tafigel PUR 44:PG:Water (1:1:1) | 0,3 | Thickener Solution |
| **Core-sheath-shell polymer particles obtained in examples 1 to 6** | **13,0** | **Opaque Polymer** |
| Water | 1,0 | Solvent |

(continued)

| Component | Weight (g) | Key Function |
|---|---|---|
| Total | 100,0 | - |

Physical properties of the paints:

Table 7:

| Trial No: | 1 | 2 | 3 | 4 | 5 | 6 |
|---|---|---|---|---|---|---|
| | Control | RMMA | RMMA & RSTY, RMMA in seed | RMMA in seed and emulsion. | RMMA in seed. | RSTY |
| Initial PH | 9,8 | 9,1 | 9,1 | 9,0 | 9,1 | 9,7 |
| Initial Brookfield Viscosity (mPa.s) | 7300/388 0/2390 | 7900/416 0/2530 | 7650/4060/247 0 | 7600/4000/254 0 | 7420/396 0/2480 | 7733/394 0/2500 |
| Initial Krebs Viscosity (KU) | 89 | 90 | 89 | 90 | 90 | 89 |
| Overnight Brookfield Viscosity (mPa.s) | 7400/404 0/2560 | 7050/386 0/2450 | 7400/3880/241 0 | 7750/4080/254 0 | 7590/394 0/2460 | 7720/412 0/2500 |
| Overnight Krebs Viscosity (KU) | 89 | 89 | 91 | 89 | 90 | 90 |
| Storage Stability (50°C, 1 week) Brookfield Viscosity (mPa.s) | 5450/344 0/1930 | 5950/320 0/1990 | 5800/3140/195 0 | 6030/3390/203 0 | 6100/342 0/2450 | 6060/316 0/1980 |
| Storage Stability (50°C, 1 week) Krebs Viscosity (KU) | 83 | 84 | 84 | 83 | 82 | 83 |
| L*a*b (White Paint) | 97,11/- 0,78/0,97 | 97,29/- 0,78/1,10 | 97,12/- 0,77/1,03 | 97,31/- 0,77/1,11 | 97,25/- 0,78/0,99 | 97,11/- 0,80/1,19 |
| Opacity, % (inventive sample vs Comparative) | 97.4 | 979 | 97.6 | 97.8 | 97.7 | 97.9 |
| Gloss @ (20°/60°/85°) | 1,4/3,0/ 25,0 | 1,4/3,0/ 25,4 | 1,4/3,0/25,7 | 1,4/3,1/25,8 | 1,4/3,0/ 25,4 | 1,3/3,1/ 19,7 |
| Burnishing Resistance (Gloss @85°), Before | 25,0 | 25,4 | 25,7 | 25,8 | 25,4 | 19,7 |
| Burnishing Resistance (Gloss @85°), After | 31,1 | 31,3 | 31,3 | 31,6 | 31,2 | 24,3 |
| Tinting Strength (3% "Violet PV 23" tinted) | | | | | | |
| L*a*b* | 48,90/17, 51/-33,60 | 49,05/17, 82/-33,96 | 49,04/17,65/- 33, 70 | 49,16/17,55/- 33,56 | 49,29/17, 69/-33,62 | 49,13/17, 74/-33,37 |
| ΔE | ref | 0,37 | 0,24 | 0,37 | 0,41 | 0,40 |

(continued)

| | Control | RMMA | RMMA & RSTY, RMMA in seed | RMMA in seed and emulsion. | RMMA in seed. | RSTY |
|---|---|---|---|---|---|---|
| **Tinting Strength (3% "Black 7" tinted)** | | | | | | |
| **L\*a\*b\*** | 44,15/- 1,33/- 3,71 | 44,72/- 1,39/- 3,96 | 44,61/-1,31/- 3,74 | 44,36/-1,28/- 3,65 | 44,39/- 1,29/- 3,54 | 44,42/- 1,06/- 3,44 |
| **$\Delta$E** | Ref | 0,18 | 0,53 | 0,65 | 0,3 | 0,46 |
| **ISO 11998 Scrub resistance micron loss ($\mu$m)** | 1,7 | 1,1 | 1,1 | 1,3 | 1,4 | 1,2 |
| **Adhesion Properties (0:good;5:bad)** | | | | | | |
| **Fibercement (Dry-Wet), 7days** | 0-0 | 0-0 | 0-0 | 0-0 | 0-0 | 0-0 |
| **Pine Wood (Dry-Wet), 7days** | 1-2 | 0-2 | 1-2 | 0-2 | 1-2 | 1-2 |
| **Stainless Steel (Dry-Wet), 7days** | 0-1 | 0-1 | 0-1 | 0-1 | 0-1 | 0-1 |

**Description of the analytical tests:**

<u>pH</u>: To measure pH effectively (according to ISO 976), a pH meter is used (Schott LAB 850 type). Paint sample is put on a clean glass beaker for measurement. The pH meter is calibrated according to instructions. Sample to be measured should be well-mixed and homogeneous. The probe of pH meter is immersed into the paint sample for the specified time and pH is measured.

Initial pH Test: The pH level of the paint is measured using a pH meter after ensuring the sample is well-mixed.

<u>Viscosity</u>: Brookfield and Krebs Stormer viscometers are commonly used to measure viscosity, at a specific temperature, under defined shear conditions.

Brookfield viscometer gauges the torque needed to rotate a spindle in a fluid. By altering speeds and spindles, a range of viscosities can be measured. Viscosity of paint can be measured by a Brookfield viscometer at 25°C as cP (centipoises).

Krebs viscometer is also utilized to measure the viscosity of paints according to ASTM D562. The Krebs Stormer viscometer indeed stands as a standard tool in the paint industry for assessing viscosity, providing a convenient means to measure resistance in paint at a rotation speed. The resistance created by the paint is measured and expressed in Krebs units, or Kus. The higher the KU number, the more viscous is the paint. This method is especially beneficial for ensuring consistency in paint production and exploring new coating formulations. Approximately, 300 g of paint at 25°C in a container is used for measurements.

Initial Viscosity Tests: The initial flow and stirring resistance of paint are measured using Brookfield and Krebs viscometers, providing viscosity readings in millipascal-seconds (mPa.s) and Krebs Units (KU), respectively.

Overnight Viscosity Tests: Viscosity is reassessed after the paint rests overnight, with Brookfield and Krebs measurements indicating any changes in flow resistance or consistency.

<u>Storage Stability</u>: Storage stability test was done to ensure if the paint remains usable and effective throughout its shelf life or not and also to assess how the paint will perform when used after a prolonged storage period. Test was done with an internal method. 250 g wet paint samples were put in a glass container and checked in terms of odour, initial viscosity, pH and gloss. Then they put in an oven at 50°C for 7 days. After 7 days drying in oven, the samples were cooled down to room temperature, observations were done and noted such as separation, sedimentation, changes in viscosity, color, odour, or any other physical or chemical alterations. Various tests were performed on the stored samples, such as viscosity checks and pH measurement. These tests helped determining if the paint's characteristics meet the specified standards even after storage.

Following a week at 50°C, Brookfield and Krebs viscosity tests evaluate the paint's endurance against temperature-induced viscosity changes and stability.

<u>L*a*b</u>: The color of white paint is measured in the L*a*b* color space using a spectrophotometer. To measure the color of paints, the paint is first tinted with 2% pigment paste to ensure color consistency. The tinted paint is then applied to a standardized surface such as a Leneta card, using a 100 microns drawdown bar. The paint is allowed to dry and cure for 24 hours under controlled climatic conditions. After curing, the color is measured using a spectrophotometer to obtain the L*a*b values, which indicate the lightness (L*), and the chromatic coordinates (a* for red-green and b* for blue-yellow). These values are analyzed to ensure that the paint's color meets the required specifications and maintains consistency across batches. This process is crucial for maintaining high-quality standards in paint production.

<u>Opacity</u>: The test was done according to BS EN ISO 6504-3. The paints were applied to black-white contrast card to achieve a wet film thickness of 200 microns. The film width should be at least 70mm. Paint films should be cured at least for 16 hours at $(23\pm2)$°C temperature and $(50\pm5)$% relative humidity. After 7 days of curing under room conditions, opacity was measured by measuring the whiteness of the paint over the black surface using a spectrophotometer, ratioed against the whiteness on the white surface, and the result is multiplied by 100 to yield a percentage value.

<u>Gloss</u>: A wet film of 100 microns is applied to a glass substrate. The film is allowed to cure for 7 days under controlled climatic conditions. Gloss measurements of paint samples are measured by glossmeters on 100 micron (wft) paint films at three different positions. The glossmeter is placed perpendicular to the painted surface at a specified angle (commonly 20°, 60°, or 85°). The instrument emits a light beam onto the surface and the amount of reflected light is measured.

<u>Burnishing Resistance</u>: The paint's gloss before and after a burnishing process is measured to determine its resistance to wear. The burnish resistance test is designed to measure the increase in gloss of a paint or coating resulting from mechanical abrasion. For this test, PVC panels are used, along with a standard 3M abrasive pad, a weight of 450 grams, and a glossmeter capable of measuring at an 85° angle. Initially, a coating of 200 $\mu$m is applied to the panels, and the gloss is measured at 85° angles. The panels are then subjected to 20 cycles of abrasion with the abrasive pad, which is weighted with 450 grams. Following abrasion, the gloss is measured again at 85° angle. The resistance of the coating is evaluated by calculating the difference in the gloss measurements before and after abrasion, which is noted as Delta Gloss @ 85°. This test is particularly valuable for assessing the durability of coatings in environments that are prone to physical wear.

Tinting Strength: This test is executed in compliance with ASTM D 2244, used to evaluate the tinting strength of the paints. It is a method used to measure the coloring capacity of a paint or pigment when mixed with a specific quantity of white paint. Typically, this test involves mixing the sample pigment with a white paint at predetermined ratios to assess the degree of color change. Tinting strength of the paint is measured according to the internal method as explained hereinbelow.

Paint is mixed with a specific percentage of pigment and the resulting color change is measured in L*a*b* values and compared against a reference to assess tinting strength. During the test, 3% Pigment Violet 23 is mixed with paint samples (both standard reference and new experiments). Samples thoroughly mixed in their containers and their coloration are compared against a non-absorbent card. As a comparison measurement, a reference or standard from another product is drawn alongside, ensuring a 100-micron wet film thickness (WFT). Once the films are fully dried, color values of L, a, b are measured on paint films using an X-Rite spectrophotometer for analysis. Lower tinting strength indicates that the samples are exhibiting a darker hue, while higher tinting strength indicates a lighter appearance.

Scrub resistance: This test is performed following the ISO 11998 standard to evaluate a paint's durability against scrubbing. It involves subjecting the painted surface to a mechanical action using an abrasive pad and then quantifying the paint loss by measuring the reduction in film thickness, which is reported in microns.

According to ISO 11998, wet scrub resistance refers to a dry coating's capability to exhibit minimal thickness loss, calculated as an average over a specific area, after 200 wet scrubbing cycles. This method not only assesses scrub resistance but also evaluates cleanability, which defines a coating's ability to withstand soil penetration and release during cleaning without exceeding a specified reduction in thickness.

The methodology involves subjecting the coating to standardized temperature and humidity conditions before initiating the scrubbing process and conducting operations to determine the density of the dry coating. The scrubbing process, as per ISO 11998, entails 200 cycles using a standardized non-woven pad attached to a handle. However, EN 13300 (European classification) dictates that scrubbing with lower quality paints should involve only 40 cycles.

Cleanability assessment follows the same conditions as wet scrub resistance testing, except that it involves the removal of staining agents (soilants). The nature and application method of these soilants are determined by the user conducting the test.

Paints were applied on Leneta P-121-10N black vinyl charts with wet film thickness of 200 micron. After 7 days drying period at 23°C and 50% relative humidity conditions, test was carried out with a wet scrub resistance tester. After 200 cycles, abrasion was calculated in microns and classification is done according to EN 13300.

The European classification EN 13300, for interior wall and ceiling paints defines a number of parameters divided into different classes. One of them is wet scrub resistance. It classifies 5 classes differing in increasing loss of coating thickness after scrubbing according to ISO 11998. The requirements for each class are presented on the table 8 below.

Table 8:

| EN 13300 class | Requirements |
|---|---|
| 1 | < 5 $\mu$m after 200 cycles |
| 2 | $\geq$ 5 $\mu$m and < 20 $\mu$m after 200 cycles |
| 3 | $\geq$ 20 $\mu$m and < 70 $\mu$m after 200 cycles |
| 4 | < 70 $\mu$m after 40 cycles |
| 5 | $\geq$ 70 $\mu$m after 40 cycles |
| ISO 11998 requirements | |

Adhesion Properties: The level of dry adhesion to specific test panels was determined using a cross-cut test in accordance with DIN EN ISO 2409. A test paint was applied on specific test panels (fiber cement, pine, stainless metal). A 200-micron thick paint film is applied to a substrate and allowed to cure for 7 days. After curing, a dry adhesion test is performed to assess the paint's adhesion to the substrate. The coated panels were allowed to dry for 7 days at 23°C, 50% relative humidity conditions. A cross-cut was made onto the dried coated panels using a cross-cut knife (Byk-5122). A self-adhesive tape (TESA4204) was applied under uniform pressure onto the coated substrate, covering the cross-cut, where after the tape was pulled off in a single movement. The degree of dry adhesion of the coating onto the particular substrate was then classified with a scale of from 0 to 5 (according ISO Class 0-5) by determining the amount of coating that is detached or flaked partly or wholly along the edges of the cuts, where 0 means that the cross-cut area is not affected (excellent adhesion); 1 means that the affected cross-cut area is not significantly greater than 5%; 2 means that the affected cross-cut area is significantly greater than 5%, but not significantly greater than 15%; 3 means that the affected cross-cut area is significantly greater than 15%, but not significantly greater than 35%; 4 means that the affected cross-cut area is significantly greater than 35%, but not significantly greater than 65%; 5 means any degree of flaking that cannot even be classified by classification 4 (very poor adhesion).

Adhesion on Fiber Cement/Pine/Metal- Cross-cut Wet adhesion test

To determine the level of wet adhesion on test panel, a cross-cut was made onto the dried coated panels (fiber cement, pine and stainless metal) using a cross-cut knife (Byk-5122). For the wet adhesion test, a water-saturated cotton pad is placed on the painted surface for 30 minutes. Subsequently, the wet adhesion test is conducted to evaluate the paint's adhesion under moist conditions. The adhesion of the paint to various substrates, including fiber cement, pine wood, and stainless steel, is assessed after 7 days in both dry and wet environments. The level of wet adhesion was then determined according the cross-cut test method.

**Comments of the results:**

1. Viscosity Behavior: The viscosity measurements, initial, overnight and after storage, show similar behavior across all trials.

2. L*a*b (White Paint): All trials demonstrate very similar L*a*b values, indicating only minor differences in whiteness.

3. Opacity: The opacity values for all trials are high, consistently above 97%. This high level of opacity indicates excellent hiding power. We note that the opacity of inventive examples is slightly better than the opacity of the counterexample (example 1).

4. Gloss (20°/60°/85°): The gloss measurements are consistent across most trials.

5. Burnishing Resistance: All trials exhibit similar performance to the standard in terms of burnishing resistance. This similarity suggests that the formulations are equally resistant to physical wear, maintaining their gloss after treatment.

6. Tinting Strength with "Violet PV 23" and "Black 7": The $\Delta$E values, which indicate the color difference before and after tinting, are low across all trials. This result implies strong tinting strength, with minimal color change upon addition of tints. The performance is similar to the standard, indicating reliable and consistent tinting across all formulations.

7. ISO 11998 Scrub Resistance: All trials show good scrub resistance, as indicated by low micron loss. This result suggests that all paint formulations have good durability, able to withstand physical scrubbing without significant wear.

8. Adhesion Properties: The adhesion properties are generally good across all trials and surfaces, with some minor variations. This outcome indicates that the paints adhere well under both dry and wet conditions to various substrates like fiber cement, pine wood, and stainless steel.

In summary, paints prepared with an opacifying polymer obtained from at least one recycled monomer (Trials 2 to 6) demonstrate properties similar to the standard corresponding to a paint prepared with an opacifying polymer obtained from virgin monomers (Trial 1). The application outcomes are suitable, indicating that these formulations meet the necessary performance criteria for paint products. The consistency in key properties like color, opacity, gloss, tinting strength, scrub resistance, and adhesion suggest these paints are reliable and effective for their intended use.

**Claims**

**1.** Core-sheath-shell polymer *particles* containing voids, said polymer particles being obtained from at least one recycled monomer.

**2.** Core-sheath-shell polymer *particles* according to claim 1, wherein the core of the core-sheath-shell polymer *particles* is obtained from at least one recycled monomer, and/or the sheath of the core-sheath-shell polymer *particles* is obtained from at least one recycled monomer, and/or the shell of the core-sheath-shell polymer *particles* is obtained from at least one recycled monomer.

3.  Core-sheath-shell polymer *particles* according to claim 1, wherein said recycled monomer is selected from recycled methyl methacrylate, and recycled styrene, or its dimer, or its trimer.

4.  Core-sheath-shell polymer *particles* according to claim 2, wherein recycled methyl methacrylate comprises from 200 ppm to 30.000 ppm by weight of methyl isobutyrate.

5.  Core-sheath-shell polymer *particles* according to claim 2, wherein recycled methyl methacrylate comprises from 100 ppm to 10.000 ppm by weight of methyl propanoate.

6.  Core-sheath-shell polymer *particles* according to claim 2, wherein recycled methyl methacrylate comprises from 1 ppm to 15.000 ppm by weight of methyl pivalate.

7.  Core-sheath-shell polymer *particles* according to claim 2, wherein recycled styrene comprises from 100 ppm to 25.000 ppm by weight of ethylbenzene.

8.  Core-sheath-shell polymer *particles* according to claim 2, wherein recycled styrene comprises from 150 ppm to 25.000 ppm by weight of cumene.

9.  Core-sheath-shell polymer *particles* according to claim 2, wherein recycled styrene comprises from 400 ppm to 15.000 ppm by weight of xylene.

10. Core-sheath-shell polymer *particles* according to any one of the preceding claims, said polymer particles being obtained:

    - from 1 to 99.8 % by weight of at least one recycled monomer;
    - from 0.1 to 98.9% by weight of at least one additional monomer;
    - from 0.1 to 50% by weight of at least one biobased monomer.

11. Emulsion containing core-sheath-shell polymer *particles* according to any one of claims 1 to 10.

12. Emulsion containing core-sheath-shell polymer *particles* according to claim 11 wherein said particles are obtained at least from recycled methyl methacrylate, said emulsion comprising from 20 to 30.000 ppm of methyl isobutyrate.

13. Emulsion containing core-sheath-shell polymer *particles* according to claim 11 wherein said particles are obtained at least from recycled styrene, said emulsion comprising from 50 ppm to 18.800 ppm by weight of ethylbenzene.

14. Process for preparing an emulsion containing core-sheath-shell polymer particles, said polymer particles being obtained from at least one recycled monomer, said process comprising the steps of:

    (i) emulsion polymerizing a core (A) from a core monomer system;
    (ii) encapsulating said core (A) with a sheath polymeric layer (B) by emulsion polymerizing a sheath monomer system (E1);
    (iii) encapsulating said core-sheath particles with a polymeric shell (C) by emulsion polymerizing a shell monomer system (E2);
    (iv) neutralizing and swelling the resultant core-sheath-shell polymer particles,

    wherein at least one monomer used in said process is a recycled monomer.

15. Process for preparing an emulsion containing core-sheath-shell polymer particles according to claim 14, wherein the recycled monomer is methyl methacrylate comprising from 200 ppm to 30.000 ppm by weight of methyl isobutyrate, and/or recycled styrene comprising from 100 ppm to 25.000 ppm by weight of ethylbenzene.

16. Use of core-sheath-shell polymer *particles* according to any one of claims 1 to 10 or emulsion containing core-sheath-shell polymer *particles* according to any one of claims 11 to 13 as opacifying agents.

17. Use according to claim 16 in coating compositions or as textile polymers in finishing, in coating, in flocking, or as textile auxiliaries in pretreatment, in dyeing, in printing, or in finishing, or as leather additive in wet end or in finishing.

Europäisches
Patentamt

European
Patent Office

Office européen
des brevets

# EUROPEAN SEARCH REPORT

**Application Number**

EP 24 18 2414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 511 312 B1 (ORGANIK KIMYA SANAYI VE TIC A S [TR]) 5 June 2013 (2013-06-05) * claims 1-16; examples 1-4 * | 1-17 | INV. C09D151/00 |
| X | WO 00/68304 A1 (NESTE CHEMICALS OY [FI]; PAVLYUCHENKO VALERY [RU] ET AL.) 16 November 2000 (2000-11-16) * claims 1-14; examples 1-5 * | 1-17 | |
| X | CN 117 980 402 A (LG CHEMICAL LTD) 3 May 2024 (2024-05-03) * paragraph [0043]; claims 1-13; tables 1-5 * | 1-17 | |
| A | ACHILIAS ET AL: "Chemical recycling of poly(methyl methacrylate) by pyrolysis. Potential use of the liquid fraction as a raw material for the reproduction of the polymer", EUROPEAN POLYMER JOURNAL, PERGAMON PRESS LTD OXFORD, GB, vol. 43, no. 6, 5 June 2007 (2007-06-05), pages 2564-2575, XP022105997, ISSN: 0014-3057, DOI: 10.1016/J.EURPOLYMJ.2007.02.044 * the whole document * | 1-17 | **TECHNICAL FIELDS SEARCHED (IPC)** C08L C09D |
| A | GKALIOU KYRIAKI ET AL: "Recycled PMMA prepared directly from crude MMA obtained from thermal depolymerization of mixed PMMA waste", WASTE MANAGEMENT., vol. 164, 13 April 2023 (2023-04-13), pages 191-199, XP093050028, US ISSN: 0956-053X, DOI: 10.1016/j.wasman.2023.04.007 * the whole document * | 1-17 | |

-/--

The present search report has been drawn up for all claims

| Place of search | Date of completion of the search | Examiner |
|---|---|---|
| Munich | 29 November 2024 | Madalinski, Maciej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................
& : member of the same patent family, corresponding document

EPO FORM 1503 03.82 (P04C01)

page 1 of 2

| | Europäisches Patentamt European Patent Office Office européen des brevets | **EUROPEAN SEARCH REPORT** | **Application Number** EP 24 18 2414 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/388942 A1 (KRILL STEFFEN [DE] ET AL) 8 December 2022 (2022-12-08) * claims 1-15 * ----- | 1-17 | |
| | | | TECHNICAL FIELDS SEARCHED (IPC) |

| The present search report has been drawn up for all claims | | |
|---|---|---|
| Place of search Munich | Date of completion of the search 29 November 2024 | Examiner Madalinski, Maciej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 18 2414

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | | Publication date | Patent family member(s) | | Publication date |
|---|---|---|---|---|---|
| EP 2511312 | B1 | 05-06-2013 | AU | 2012231050 A1 | 04-07-2013 |
| | | | BR | 112013024119 A2 | 13-12-2016 |
| | | | CA | 2823664 A1 | 27-09-2012 |
| | | | CN | 103596999 A | 19-02-2014 |
| | | | DK | 2511312 T3 | 05-08-2013 |
| | | | EP | 2511312 A1 | 17-10-2012 |
| | | | ES | 2412399 T3 | 11-07-2013 |
| | | | JP | 5769827 B2 | 26-08-2015 |
| | | | JP | 2014513157 A | 29-05-2014 |
| | | | KR | 20130130801 A | 02-12-2013 |
| | | | PL | 2511312 T3 | 31-10-2013 |
| | | | PT | 2511312 E | 20-06-2013 |
| | | | RU | 2013142819 A | 27-04-2015 |
| | | | US | 2012245240 A1 | 27-09-2012 |
| | | | WO | 2012126597 A1 | 27-09-2012 |
| WO 0068304 | A1 | 16-11-2000 | AU | 4299500 A | 21-11-2000 |
| | | | EP | 1098927 A1 | 16-05-2001 |
| | | | FI | 991051 A | 08-11-2000 |
| | | | WO | 0068304 A1 | 16-11-2000 |
| CN 117980402 | A | 03-05-2024 | CN | 117980402 A | 03-05-2024 |
| | | | EP | 4386048 A1 | 19-06-2024 |
| | | | JP | 2024534649 A | 20-09-2024 |
| | | | KR | 20230047908 A | 10-04-2023 |
| | | | TW | 202332730 A | 16-08-2023 |
| | | | WO | 2023055140 A1 | 06-04-2023 |
| US 2022388942 | A1 | 08-12-2022 | CN | 114450264 A | 06-05-2022 |
| | | | EP | 3798202 A1 | 31-03-2021 |
| | | | EP | 4034519 A1 | 03-08-2022 |
| | | | JP | 7502422 B2 | 18-06-2024 |
| | | | JP | 2022549485 A | 25-11-2022 |
| | | | TW | 202124351 A | 01-07-2021 |
| | | | US | 2022388942 A1 | 08-12-2022 |
| | | | WO | 2021058293 A1 | 01-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2511312 B1